# EUROPEAN PATENT APPLICATION

(11) **EP 4 467 331 A1**
(43) Date of publication of application: **27.11.2024**
(21) Application number: 23196128.5
(22) Date of filing: 08.09.2023
(51) Int. Cl.: B29D 30/06, B29D 30/00

(54) **POST-CURE TIRE HANDLING DEVICE AND A METHOD OF OPERATING A POST-CURE TIRE HANDLING DEVICE**

(30) Priority: 23.05.2023 IN 202341035640
(71) Applicant: Larsen & Toubro Limited, Kanchipuram, Tamil Nadu 631561 (IN)
(72) Inventor: Karuppusamy, Ganesh Raja, Vedal 631561 Kanchipuram, Tamil Nadu (IN); Subramanian, Mahendraprasath, Vedal 631561 Kanchipuram, Tamil Nadu (IN); Ranganathan, Ananth, Vedal 631561 Kanchipuram, Tamil Nadu (IN); Duraisamy, Santhosh Kumar, Vedal 631561 Kanchipuram, Tamil Nadu (IN); Kumarasamy, Kamalraj Udumalpet, Vedal 631561 Kanchipuram, Tamil Nadu (IN); Manikandan, Ashokkumar, Vedal 631561 Kanchipuram, Tamil Nadu (IN); Gurusamy, Nallamuthusamy, Vedal 631561 Kanchipuram, Tamil Nadu (IN); Nateson, Sudharsanan, Vedal 631561 Kanchipuram, Tamil Nadu (IN); Mani, Prabu, Vedal 631561 Kanchipuram, Tamil Nadu (IN); Samson, Mangam Isaiah, Vedal 631561 Kanchipuram, Tamil Nadu (IN); Gunasundaram, Vigneshwaran, Vedal 631561 Kanchipuram, Tamil Nadu (IN); Jagannathan, Srikanth, Vedal 631561 Kanchipuram, Tamil Nadu (IN)
(74) Representative: Swea IP Law AB

(57) **Abstract**

A post-cure tire handling device includes a rigidly mounted bottom frame (1), and movable middle (2) and top (3) frames. The middle and bottom frames form a bottom cavity (14); and the top and middle frames form a top cavity (15). A bottom cavity holder assembly (16) comprises a bottom cavity upper rim plate (18) mounted to the middle frame (2) and is capable of moving together with the middle frame (2). A bottom cavity lower rim plate (17) is mounted to the bottom frame (1) and is axially aligned to the bottom cavity upper rim plate (18). A top cavity holder assembly (19) comprises a top cavity upper rim plate (21) mounted to the top frame (3) and is capable of moving together with the top frame (3). A top cavity lower rim plate (20) is mounted to the middle frame (2) and is capable of moving together with the middle frame.

## Description

### Technical Field

The present disclosure, in general, relates to machinery for manufacturing tires of nearly all sizes. It specifically relates to post-cure tire handling devices installed proximal to tire curing presses to receive, inflate, and cool the cured tires from the presses.

### Background

Automobile tires are expected to have a high degree of strength and resilience to withstand the varying dynamics in the road. The tires exiting from the tire vulcanizing/curing presses are less stable in its shape and are considered to be very soft and fragile having highly complex elastomeric materials and consisting of many semi-finished parts making them susceptible to shrinking, deformation and other structural damages.

Thus, there arises a requirement for post treatment of these tires under predetermined conditions similar to automobile rim mounting and inflation. A Post Cure Inflator (PCI) is such a device that simulates the loading conditions with air inflation on a soft cured tire to impart the strength and high rigidity, and to cool the hot tire. The cured tire is placed in-between top and bottom annular rim plates, forming a leak proof closed chamber into which pressurized air is supplied up to a prescribed time. This initiates the action of cooling under inflation which imparts stability to the tire over a particular period with relation to its curing cycle time. Subsequently, the cooled tire is unloaded from the PCI and transported to the main conveyor.

### Summary

Some aspects of the disclosure relate to a post-cure tire handling device including a rigidly mounted bottom frame, a middle frame capable of moving relative to the bottom frame, and a top frame capable of moving relative to a middle frame. The middle frame and the bottom frame form a bottom cavity and the top frame and the middle frame form a top cavity. A bottom cavity holder assembly includes a bottom cavity upper rim plate and a bottom cavity lower rim plate. The bottom cavity upper rim plate is mounted to the middle frame and is capable of moving together with the middle frame. The bottom cavity lower rim plate is mounted to the bottom frame and is axially aligned to the bottom cavity upper rim plate. A top cavity holder assembly includes a top cavity upper rim plate and a top cavity lower rim plate. The top cavity upper rim plate is mounted to the top frame and is capable of moving together with the top frame. The top cavity lower rim plate is mounted to the middle frame and is axially aligned to the top cavity upper rim plate. The top cavity lower rim plate is capable of moving together with the middle frame.

Some aspects of the disclosure relate to a post-cure tire handling device including a rigidly mounted first frame and a second frame capable of moving relative to the first frame. The first frame and the second frame form a cavity. The device includes a holder assembly for engaging with a tire within the cavity. The holder assembly includes an upper rim plate mounted to the second frame and capable of moving together with the second frame. A lower rim plate is axially aligned to the upper rim plate. The lower rim plate is mounted to the first frame and is capable of moving radially IN and OUT with respect to the first frame.

Some other aspects of the disclosure relate to a method of operating the post-cure tire handling device including the steps of:
moving the bottom cavity lower rim plate radially OUT to receive a first tire;
placing the first tire on the bottom cavity lower rim plate;
moving the bottom cavity lower rim plate radially IN to axially align with the bottom cavity upper rim plate;
closing the bottom cavity by moving the middle frame toward the bottom frame;
inflating and cooling the first tire;
moving the top cavity lower rim plate radially OUT to receive a second tire;
placing the second tire on the top cavity lower rim plate;
moving the top cavity lower rim plate radially IN to axially align with the top cavity upper rim plate;
closing the top cavity by moving the top frame toward the middle frame; and inflating and cooling the second tire.

These and other aspects will be apparent from the following detailed description. In no event, however, should this brief summary be construed to limit the claimable subject matter.

### Brief Description of the Drawings

The disclosed embodiments may be better understood by referring to the figures, in which like reference numerals refer to identical or functionally-similar elements throughout the separate views, further illustrate the present invention and, together with the detailed description of the invention, serve to explain the principles of the present invention.
FIG. 1 is a schematic top view of the layout of tire manufacturing machineries handling cured tire;
FIG. 2 is a schematic side view of the layout of tire manufacturing machineries handling cured tire;
FIGS. 3A-3C schematically show different views of the post-cure tire handling device in fully open condition according to some embodiments;
FIGS. 4A-4C schematically show different views of the post-cure tire handling device in fully closed condition according to some embodiments;
FIGS. 5A-5B schematically shows the post-cure handling device in different positions during operation;
FIGS. 6A-6B schematically are different views of the post-curing tire handling device showing the operator accessibility of the stations according to some embodiments;
FIG. 7 is a schematic view of the lower holder assembly according to some embodiments;
FIG. 8 is a schematic cross-sectional view of the lower holder assembly according to some embodiments;
FIG. 9A and 9B schematically show the cross-sectional view of the lower holder assembly with the lower rim plate in expanded and compressed conditions, respectively;
FIG. 10 is a schematic view of the upper holder assembly according to some embodiments;
FIG. 11 is a schematic isometric view of a safety lock mechanism for the bottom cavity according to some embodiments;
FIG. 12A is a schematic cross-sectional view of the bottom cavity safety lock mechanism in unlock condition;
FIG. 12B is a schematic cross-sectional view of the bottom cavity safety lock mechanism in lock condition;
FIG. 13 is a schematic isometric view of a safety lock mechanism for the top cavity according to some embodiments;
FIG. 14A is a schematic cross-sectional view of the top cavity safety lock mechanism in unlock condition;
FIG. 14B is a schematic cross-sectional view of the top cavity safety lock mechanism in lock condition;
FIG. 15 schematically shows different isometric views of a tire stripper assembly according to some embodiments; and
FIGS. 16A-16M schematically show the operational steps of the tire handling device according to some embodiments.

### Detailed Description

In the following description, reference is made to the accompanying drawings that form a part hereof and in which various embodiments are shown by way of illustration. The drawings are not necessarily to scale. It is to be understood that other embodiments are contemplated and may be made without departing from the scope or spirit of the present description. The following detailed description, therefore, is not to be taken in a limiting sense.

The process of vulcanization of tires involves a substantial amount of heat energy introduced inside an elastomeric material for curing. The cured tire has thicker material areas which form treads and thinner material areas which form the side wall. The thicker material areas comprise steel belt, belt cover layer and considerably thicker rubber. A reinforcing cord is embedded within the tire which can be a chemical fibre material e.g., polyester or nylon fibre. The vulcanizing process connects the components of the green (uncured) tire together and impress elastic properties to the base materials and the rubber/rubber layer by means of crosslinking process.

After the vulcanizing process, the removal of green tire from the tire vulcanizing machine is sought as early as possible to equip the tire vulcanizing machine with a new green tire. In this way, the process cycle time is reduced, and the output of the vulcanizing machine is maximized. If not completely cooled immediately after vulcanizing, the cure tire may have low structural integrity and cannot withstand higher external forces and surface pressure. If the cured tire is left to cool naturally, the tire will be deformed due to a difference in the amount of contraction between thicker area and thinner areas of the cured tire. The shrinkage process and internal material stresses can provide undesirable results and may deform the tire plastically and may lead to scraping of tires.

To prevent such deformation and damages to the cured Tire, an after-treatment equipment called Post Cure Inflator (hereinafter "PCI") is positioned in the vicinity of the curing press. In order to be properly positioned within the PCI, the tire must be caught after discharge from the press and properly centered for engagement with bead engaging annular rims of the PCI when the PCI closes. The devices used for catching and centering the cured tire between the annular rims of PCI are complex and costly. The forces exerted on the cured tire during the positioning of the cured tire from an unloading device into the PCI stations may cause damage to the tire, such as flat spots or the like. Numerous centering arrangements are required for concentrically placing the cured tire loading, inflation and unloading. Inaccuracy in the centering arrangements may cause improper locking between annular rim plates and cured tire and a defective tire will result.

Installation of a PCI normally requires large frames to house the PCI after-treatment stations occupying more space and increasing costs and machine footprint. Due to the large height of the PCI frames, the annular rim plates are mounted at a higher level from the floor in the top after-treatment station which in turn increases the stroke length that the unloading device should travel in order to place the cured tire into the top after-treatment station. Further, an operator is required to carry the tire rim plate, which is of considerable weight, to the top of the PCI during maintenance work. A separate platform is required for the operator to access and change the top station tire rim plate to mount tires of a different tire bead size, which also increases the machine footprint. Also, most PCIs use a nut/screw arrangement connected to the top/bottom tire rim to move the rims towards each other. This arrangement requires more operational space within each of the top and bottom after-treatment stations ultimately increasing the height of the PCI and making it cumbersome for maintenance activity to be performed especially in the top after-treatment station. In some aspects, the PCI is mounted as close to the press as possible, a large conveyor area is usually required to move the tire from the press to the final conveyor. Ease of installation and dismantling the construction is desired to increase mobility of the machine and handling devices.

Embodiments described herein address these and other challenges.

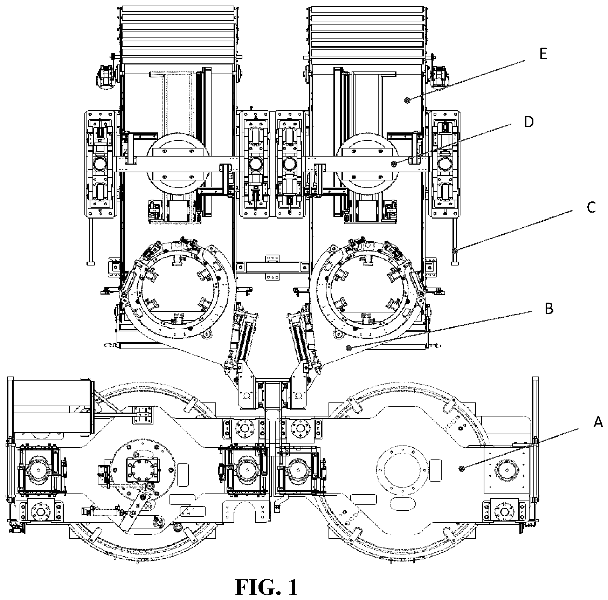

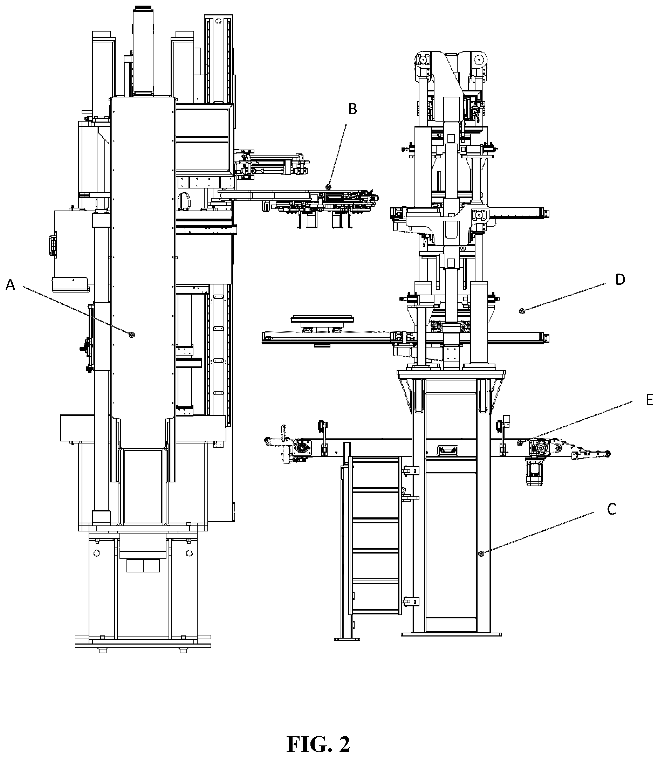

FIGS. 1 and 2 show the schematic top and side views of a tire production line in a rubber processing plant. The production line includes a vulcanizing press (A) coupled to an unloading device (B). A post-cure tire handling device, also called a post cure inflator (PCI) (D), is positioned behind the press (A) and is configured to receive the cured tire from the press (A) using the unloading device (B). A conveyor (E) is provided adjacent the PCI (D) to receive the processed tire from the PCI (D) and to transfer the tire to the next station for further process. The PCI (D) and the conveyor (E) are mounted on an underframe (C).

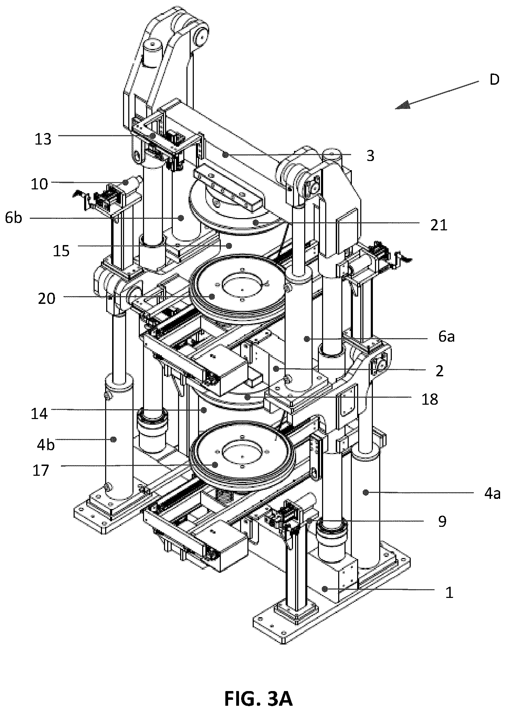

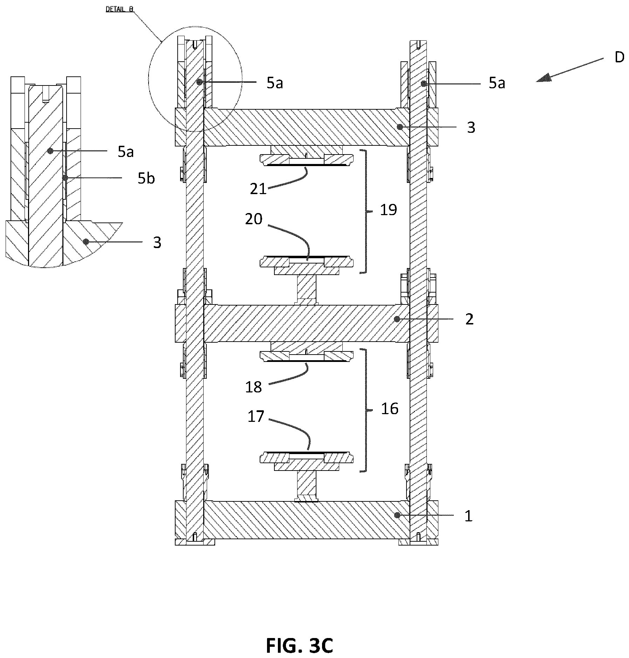

FIGS. 3A-3C shows the PCI (D) in its fully open condition without tires mounted in the top and bottom after-treatment stations (Sₜ, S_{b}). The PCI includes a bottom frame (1), a middle frame (2) and atop frame (3). The bottom frame (1) is rigidly mounted on the support structure. The middle frame (2) is capable of moving relative to the bottom frame (1). The PCI includes at least two guide columns (5a) mounted on the bottom frame (1). The middle frame (2) moves relative to the bottom frame (1) on the guide columns (5a) through a bush (5b) made up of a sacrificial material. The vertically separated middle frame (2) and the bottom frame (1) form a bottom cavity (14) which functions as the bottom after-treatment station. In some embodiments, the PCI can be used with a single cavity/after treatment station having a stationary bottom frame (1) and a moveable middle frame (2).

The bottom cavity (14) includes a bottom cavity holder assembly (16) capable of accommodating a tire for post-curing. The bottom cavity holder assembly (16) includes a bottom cavity lower rim plate (17) and a bottom cavity upper rim plate (18) axially aligned to each other. The bottom cavity upper rim plate (18) is assembled to the middle frame (2) and moves together with the middle frame (2) in the axial direction towards and away from the bottom cavity lower rim plate (17). The bottom cavity lower rim plate (17) is secured to the bottom frame (1) and, in some embodiments, is capable of moving radially IN and OUT with respect to the bottom frame (1). The bottom cavity lower rim plate (17) can be spring-loaded as will be explained later. The bottom cavity lower rim plate (17) is secured to the bottom frame (1) and rigidly fixed in the axial direction such that it does not move in a direction towards and/or away from the bottom cavity upper rim plate (18) other than the available spring cushion provided to the spring-loaded bottom cavity lower rim plate (17).

At least one middle frame actuator (4a, 4b) is mounted on the bottom frame (1) to move the middle frame (2) towards and away from the bottom frame (1). The middle frame actuator (4a, 4b) may be a hydraulic, pneumatic, or an electric actuator. The actuator (4a, 4b) may have a stroke length sufficient to lift the middle frame (2) away from the bottom frame (1) in order to position or remove the tire accommodated within the bottom cavity (14). In some aspects, two middle frame actuators (4a, 4b) are mounted diagonally opposite to each other on the bottom frame (1) as best shown in FIG. 3A or, in some cases, can be mounted in line to each other on the bottom frame (1).

The top frame (3) of the PCI is capable of moving relative to the middle frame (2). The top frame (3) moves relative to the middle frame (2) on the guide columns (5a) through a bush (5b) made up of a sacrificial material. The vertically separated top frame (3) and the middle frame (2) form a top cavity (15) which functions as the top after-treatment station. The top cavity (15) and bottom cavity (14) function independent of each other, such that the middle frame (2) is capable of moving relative to the bottom frame (1) without disturbing the top cavity (15).

The top cavity (15) includes a top cavity holder assembly (19) capable of accommodating a tire for post-curing. The top cavity holder assembly (19) includes a top cavity lower rim plate (20) and a top cavity upper rim plate (21) axially aligned to each other. The top cavity upper rim plate (21) is assembled to the top frame (3) and moves together with the top frame (3) towards and away from the top cavity lower rim plate (20). The top cavity lower rim plate (20) is secured to the middle frame (2) and, in some embodiments, is capable of moving radially IN and OUT with respect to the middle frame (2). The top cavity lower rim plate (20) in some embodiments is spring loaded. The axial movement of the top cavity lower rim plate (20) is not limited to the spring cushion provided to the spring-loaded top cavity lower rim plate (20) since it can also move together with the middle frame (2).

In a preferred embodiment, the bottom cavity lower rim plate (17) remains rigidly fixed in the axial direction and the bottom cavity upper rim plate (18), the top cavity lower rim plate (20), and the top cavity upper rim plate (21) are movable in the axial direction.

The bottom cavity upper rim plate (18) is mounted on a lower surface (3a) of the middle frame (3), and the top cavity lower rim plate (20) is mounted on an opposite upper surface (3b) of the middle frame (3) when viewed in the front view.

At least one top frame actuator (6a, 6b) is mounted on the middle frame (2) to move the top frame (3), together with the top cavity upper rim plate (21), towards and away from the middle frame (2). The top frame actuator (6a, 6b) may be a hydraulic, pneumatic, or an electric actuator. The actuator (6a, 6b) may have a stroke length at least sufficient to lift the top frame (3) upto a predetermined distance in order to position or remove the tire accommodated within the top cavity (15). In some aspects, two top frame actuators (6a, 6b) are mounted diagonally opposite to each other on the middle frame (2) as best shown in FIG. 3A or, in some cases, can be mounted in line to each other on the middle frame (2). The middle frame (2) is designed to withstand mechanical forces and stresses required to mount and move the various components assembled thereon, including the bottom cavity upper rim plate (18), the top cavity lower rim plate (20), and the top frame actuators (6a, 6b). Therefore, when the middle frame (2) moves towards and away from the bottom frame (1) when actuated by the middle frame actuator (4a, 4b), the bottom cavity upper rim plate (18), the top cavity lower rim plate (20), the top cavity upper rim plate (21), the top frame (3), the top frame actuator (6a, 6b), together with the middle frame (2), move as a single unit.

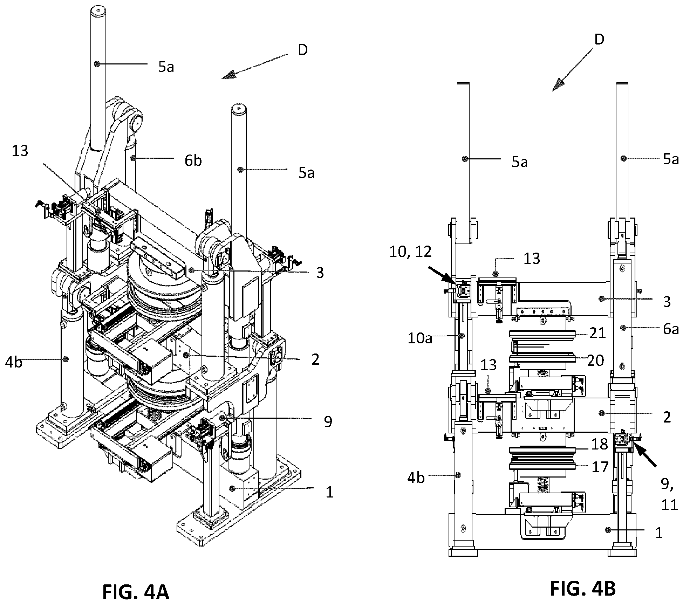

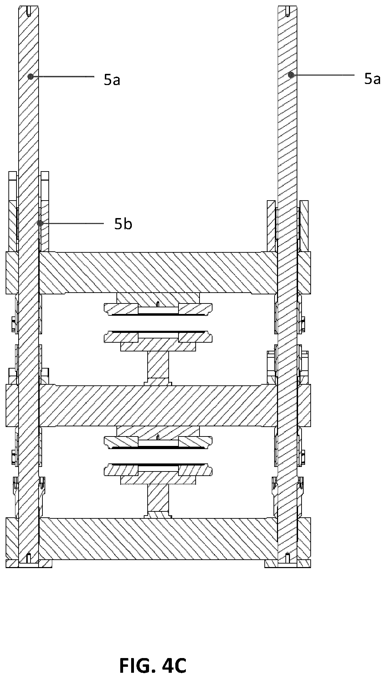

FIGS. 4A, 4B,and 4C schematically show the PCI (D) in its fully closed condition. In the fully closed condition, the middle frame (2) can be drawn towards the bottom frame (1) until the bottom cavity upper rim plate (18) is proximal to the bottom cavity lower rim plate (17), and the top frame (3) can be drawn toward the middle frame (2) until the top cavity upper rim plate (21) achieves a predetermined rim-to-rim distance with the top cavity lower rim plate (20).

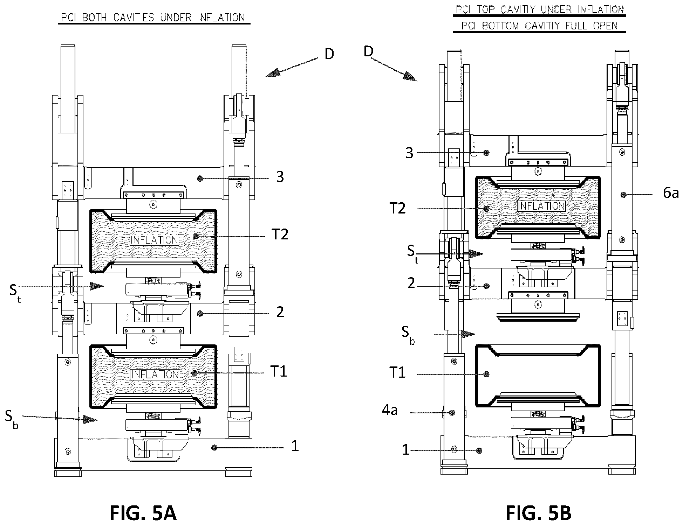

FIGS. 5A-5B show the PCI at different operating conditions. In FIG. 5A, a first tire (T1) is loaded in the bottom station (S_{b}) between bottom cavity lower rim plate (17) and bottom cavity upper rim plate (18) mounted on the bottom frame (1) and the middle frame (2), respectively. The first tire (T1) can be loaded in the bottom station (S_{b}) from both sides of the PCI. A second tire (T2) is loaded in the top station (St) and engaged between the top cavity lower rim plate (20) and a top cavity upper rim plate (21) mounted on the middle frame (2) and the top frame (3), respectively. The second tire (T2) can be loaded in the top station (St) from both sides of the PCI. In this position, the tire curing and cooling cycle is performed under desired inflation pressure on both the tires, T1, T2. According to some embodiments, the lower rim plates (17, 20) are spring loaded and configured to handle a biasing or preload pressure. The upper rim plates (18, 21) , in some cases, can be hydraulically actuated using a hydraulic cylinder and can be configured to handle a main pressure. Various curing operations may be performed on the first and/or the second tires (T1, T2) at this position. The tires may be cooled at a pre-defined cooling cycle for pre-defined time.

In FIG. 5B, the middle frame (2) is moved away from the bottom frame (2) by actuating the middle frame actuator (4a, 4b), which also pushes the top station (St) upwards, to allow unloading of the first tire (T1) from the bottom station (S_{b}) while the second tire (T2) in the top station (St) is still under inflation. The processed first tire (T1) can be removed using an unloading device (B) and placed on a conveyor (E) to be transported for further processing and finishing operations. The top frame actuator (6a, 6b) can be actuated to move the top frame (3) away from the middle frame (2) to allow unloading of the second tire (T2) from the top station (St). The processed second tire (T2) can be removed using an unloading device (B) and placed on the conveyor (E) to be transported for further processing and finishing operations.

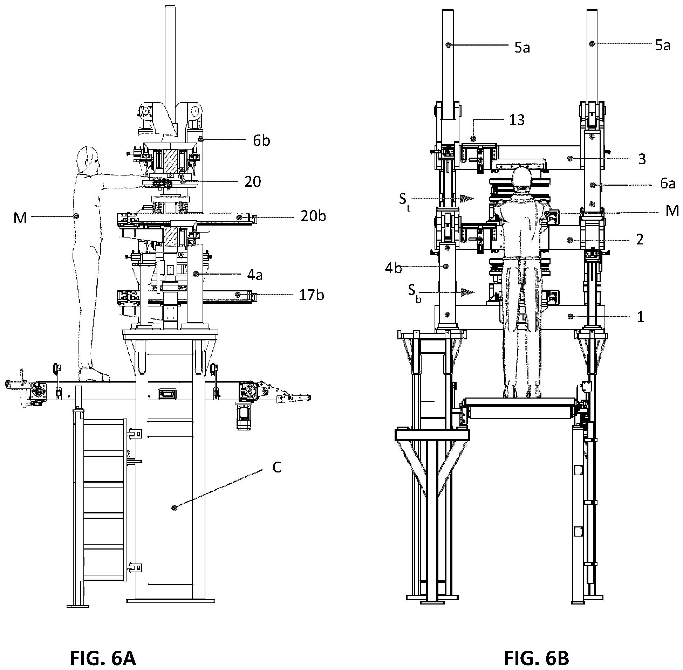

The PCI according to this disclosure includes movable middle and top frames (2, 3), reducing the total height of the PCI especially when both the middle and top frames (2, 3) are retracted to their lowest point of travel. For instance, compared with existing PCIs, the height of the PCI according to the present disclosure, in its fully open condition when both the middle and top frames (2, 3) are in their fully extended positions, can be reduced by about 10-15%. In the fully closed condition, when both the middle and top frames (2, 3) are in their fully retracted positions, the PCI according to the present disclosure can achieve about 30-40% reduction in the total height when compared with existing PCIs. The reduction in the height of the PCI allows operators to have easier access to the top station (St) without requiring additional platforms and access ladders. FIGS. 6A and 6B show the operator accessibility of the PCI. The operator (M) may desire to access the top station of the PCI mounted on the underframe (C) for maintenance activity, for instance to remove the lower rim plate (20) in the top station (St) and replace it with a different lower rim plate to mount tires of a different tire bead size. For performing such maintenance activities, the middle frame (2) is moved towards the bottom frame (1) by actuating the middle frame actuators (4a, 4b) and the top frame is moved towards the middle frame (2) by actuating the top frame actuators (6a, 6b). In the retracted position of the middle and top frames (2, 3), the operator (M) is able to easily access and perform the necessary maintenance activity in the top station without requiring additional access platforms/ladders.

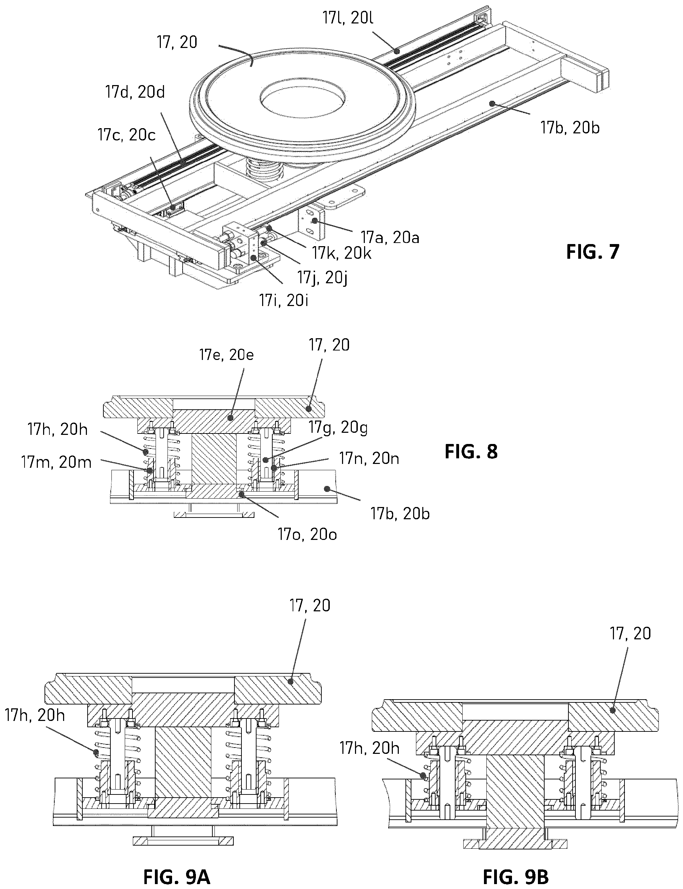

The bottom cavity lower rim plate (17) and the top cavity lower rim plate (20) are mounted on respective lower holder assemblies as will be explained with reference to FIGS. 7 and 8. Each of the lower holder assembly includes a fixed bracket (17a, 20a) mounted on the bottom frame (1) for the bottom cavity lower holder assembly and to the middle frame (2) for the top cavity lower holder assembly. A linear arm (17b, 20b) on which the lower rim plate (17, 20) is assembled is capable of sliding IN and OUT of the respective stations by means of a linear guide rail (17c, 20c) mounted the fixed bracket (17a, 20a). The linear arm (17b, 20b) is actuated by at least one hydraulic or pneumatic or electric actuator (17d, 20d) which is connected to an actuator bracket (17l, 20l). The IN/OUT movement of the linear arm (17b, 20b) is a result of the linear movement of the actuator (17d, 20d). The actuator (17d, 20d) may be telescopic or non-telescopic in nature. In an embodiment, the actuator (17d, 20d) is a pneumatic push rod. The IN and OUT positions of the linear arm (17b, 20b) is precisely controlled by means of a shock damper (17j, 20j) and an adjustable stopper (17k, 20k) assembled on a stopper bracket (17i, 20i). The stopper bracket (17i, 20i) is bolted to the fixed bracket (17a, 20a).

As shown in FIG. 8, the lower rim plates (17, 20) are resiliently mounted on the linear arms (17b, 20b). In some aspects, the lower rim plates (17, 20) are mounted on respective rim holders (17e, 20e). An end flange (17o, 20o) is bolted to the rim holder (17e, 20e) to secure the rim holder (17e, 20e). At least two guide rods (17g, 20g) are mounted on the underside of the rim holders (17e, 20e). A spring guide (17m, 20m) is mounted on the linear arm (17b, 20b) by means of fasteners. The guide rods (17g, 20g) slides inside a bush (17n, 20n) mounted on the spring guide (17m, 20m). A spring member (17h, 20h) is preloaded between the holders (17e, 20e) and the linear arm (17b, 20b) to provide resilience to the lower rim plate (17, 20) mounted on the rim holders (17e, 20e). The spring member (17h, 20h) is preloaded to withstand the maximum weight of the cured tire, the rim holder (17e, 20e), and the lower rim plate (17,20). Any additional force acting on the tire mounted on the lower rim plate (17,20) will compress the spring member (17h, 20h) until the end flange (17o, 20o) comes in contact with the bottom frame (1) for the bottom station (S_{b}) and with the middle frame (2) for the top station (St).

As shown in FIG. 9A in the unloaded condition of the lower rim plate (17, 20), i.e., when no force is exerted by the upper rim plate (18 ,21) on the tire mounted on lower rim plate (17 ,20), the spring (17h, 20h) is in an extended condition. In the loaded condition of the lower rim plate (17, 20), i.e., when middle frame actuator (4a, 4b) or the top frame actuator (6a, 6b) is actuated to bring the upper rim plate (18 ,21) to seal the tire between upper rim plate (18 ,21) and lower rim plate (17 ,20), force is exerted on the tire mounted on the lower rim plate (17 ,20) to form a leak proof chamber. The cushion required for locking the tire between the lower rim plate (17 ,20) and upper rim plate (18 ,21) is provided by the compression of spring (17h, 20h) as best shown in FIG. 9B.

When the linear arm (17b, 20b) together with the lower rim plate (17, 20) is in the IN position, the linear arm (17b, 20b) and the lower rim plate (17, 20) is aligned such that the lower rim plate (17, 20) is concentric with the upper rim plate (18, 21). When the linear arm (17b, 20b) is in the OUT position, the linear arm (17b, 20b) and the lower rim plate (17, 20) is aligned with a tire unloading device (B) of the tire curing press (see FIG. 2). Furthermore, the linear arm (17b, 20b) together with the lower rim plate (17, 20) is configured to either load or unload the tire in the OUT position, and is configured to hold the tire in the IN position.

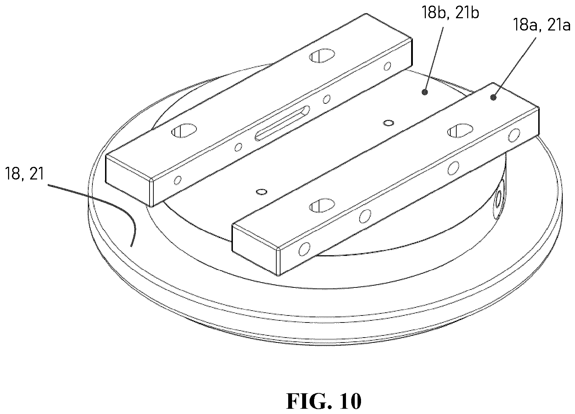

The bottom cavity upper rim plate (18) and the top cavity upper rim plate (21) are mounted on respective upper holder assemblies as will be explained with reference to FIG. 10. For the bottom cavity upper holder assembly, an upper rim holder bracket (18a) is mounted on the middle frame (2). For the top cavity upper holder assembly, an upper rim holder bracket (21a) is mounted on the top frame (3). A top rim holder (18b, 21b) which houses the upper rim plate (18, 21) is bolted to the upper rim holder bracket (18a, 21a). The upper rim plates (18, 21) are rigidly mounted on, and moves together with, respective middle and top frames (2, 3). Separate nut/screw arrangements are not required to move the upper rim plates (18, 21) towards respective lower rim plates (17,20). One or more sensing devices may be provided for initiating and controlling the movement of each of the upper rim plates (18, 21).

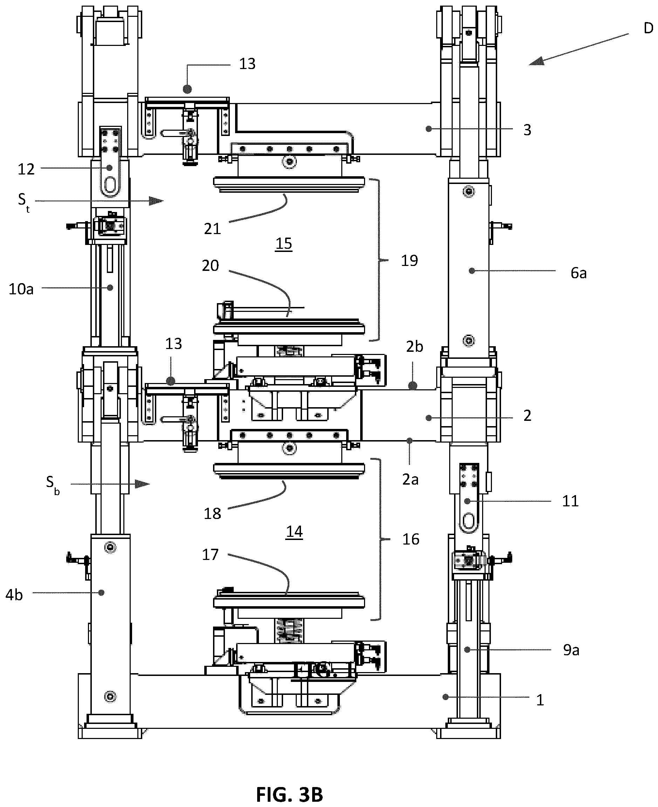

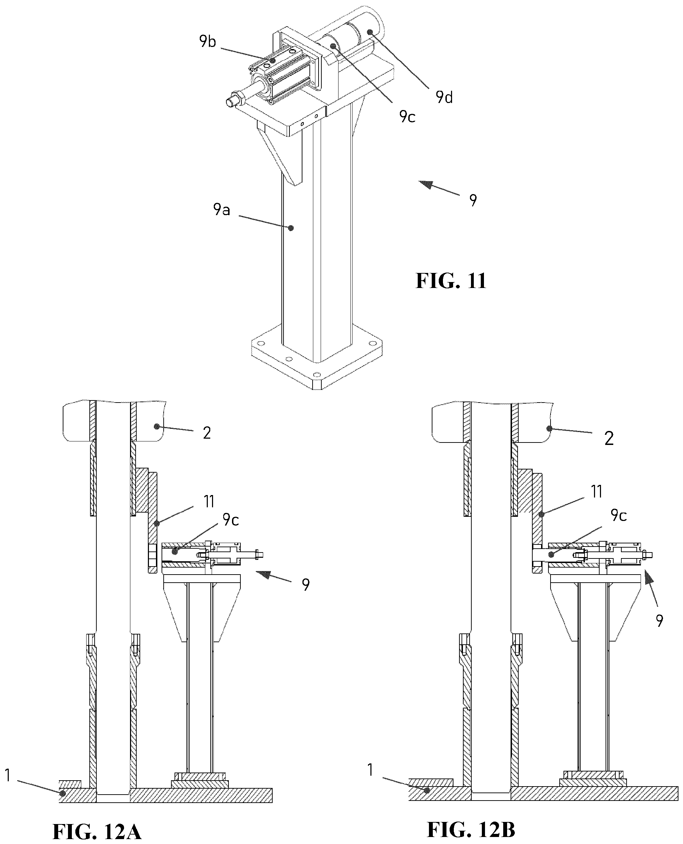

The middle frame (2) can be locked at a desired distance from the bottom frame (1) using a safety lock mechanism (9) as shown in FIG. 3A, 3B and 11. The safety mechanism (9) for locking the middle frame (2) includes a lock cylinder bracket (9a) rigidly mounted on the bottom frame (1). A lock pin (9c) capable of engaging with a middle frame lock lever (11) is connected to an actuator (9b) and slides inside a sacrificial guide bush (9d). The actuator (9b) may be a pneumatic actuator, or an electric actuator or a hydaulic actuator.

FIG. 12A shows the safety lock mechanism (9) in an unlocked condition since the lock pin (9c) is not engaged with the middle frame lock lever (11). In this condition, the middle frame (2) can move towards and away from the bottom frame (1) upon actuation. FIG. 12B shows the safety lock mechanism (9) in a locked condition. During locking, the lock pin (9c) engages with the middle frame lock lever (11) connected to the middle frame (2) by triggering the actuator (9b) to push the safety lock pin (9c) inside the middle frame lock lever (11) and lock the middle frame (2) at a predetermined distance from the bottom frame (1). The middle frame is held in a locked position using the safety lock mechanism (9) such that the middle frame (2) does not accidentally move towards the bottom frame (1) and cause any injury to an operator who may be performing a maintenance activity in the bottom station.

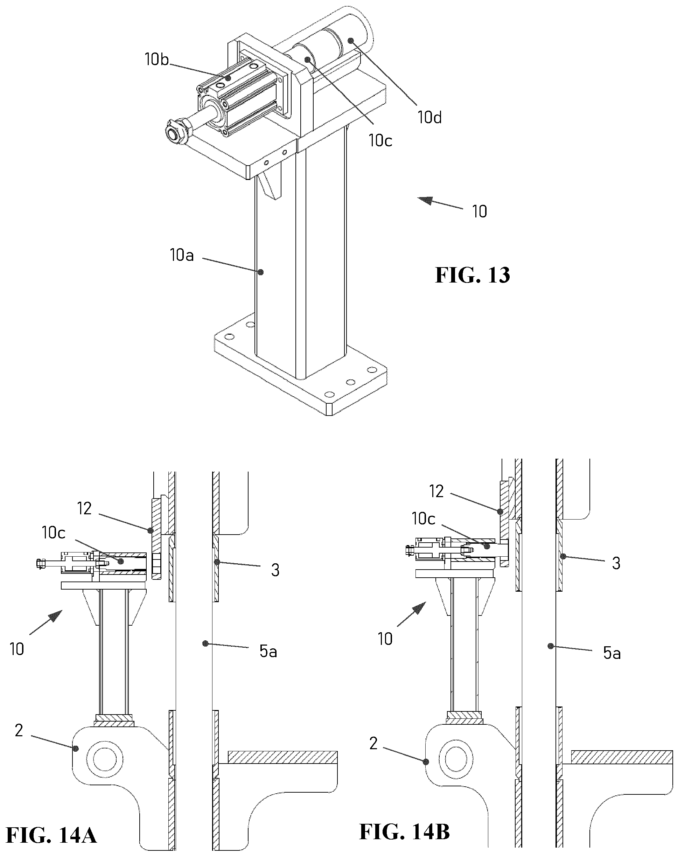

The top frame (3) can be locked at a desired distance from the middle frame (2) using a safety lock mechanism (10) as shown in FIG. 3A, 3B and 13. The safety mechanism (10) for locking the top frame (3) includes a lock cylinder bracket (10a) rigidly mounted on the middle frame (2). A lock pin (10c) capable of engaging with a top frame lock lever (12) is connected to an actuator (10b) and slides inside a sacrificial guide bush (10d). The actuator (10b) may be a pneumatic actuator, or an electric actuator or a hydaulic actuator.

FIG. 14A shows the safety lock mechanism (10) in an unlocked condition since the lock pin (10c) is not engaged with the top frame lock lever (12). In this condition, the top frame (1) can move towards and away from the middle frame (2) upon actuation. FIG. 14B shows the safety lock mechanism (10) in a locked condition. During locking, the lock pin (10c) engages with a top frame lock lever (12) connected to the top frame (3) by triggering the actuator (10b) to push the safety lock pin (10c) inside the top frame lock lever (12) and lock the top frame (3) at a predetermined distance from the middle frame (2). The top frame (3) is held in a locked position using the safety lock mechanism (10) such that the top frame (3) does not accidentally move towards the middle frame (2) and cause any injury to an operator who may be performing a maintenance activity in the top station.

In some cases, one or more sensors, such as a proximity sensor, or the like, can be provided with the safety locking mechanism (9, 10), and movable therewith, so that a control system can sense a position of the lock pin (9c, 10c) relative to the lock lever (11, 12) to determine whether the PCI is in a locked or unlocked condition.

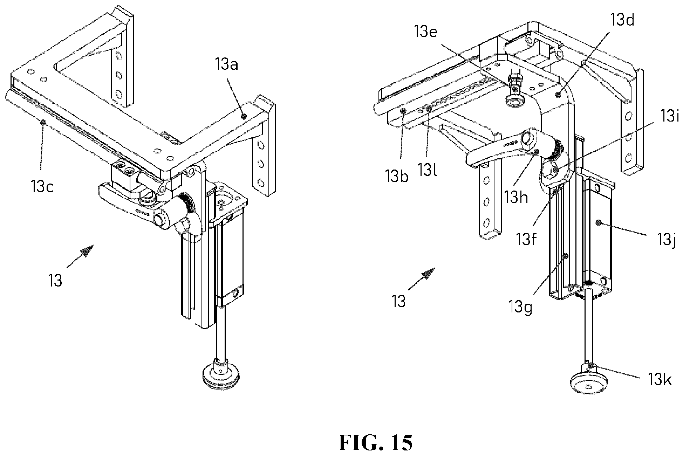

FIG. 15 illustrates a tire stripper (13) optionally mounted on the moving frames (middle frame (2) and top frame (3)) to ensure that the tire does not get stuck to the upper rim plate (18, 21) during removal of the tire from the top or bottom cavities (14, 15). FIGS. 3A, 3B and 4A, 4B shows preferred mounting locations of the tire strippers (13) on the movable frames (2, 3). For the top station (St), the tire stripper (13) is mounted on the top frame (3) and is moveable together with the top frame (3). For the bottom station (S_{b}) the tire stripper (13) is mounted on the middle frame (2) and is moveable together with the middle frame (2).

As illustrated in FIG. 15, each tire stripper (13) includes a tire stripper bracket (13a) mountable on the movable frames (2, 3). A guide block (13b) is mounted to the tire stripper bracket (13a) through a stripper guide (13c). The guide block (13b) has adjustment holes (13l) formed equidistant from each other for the linear adjustment of the tire stripper (13). A cylinder bracket (13g) is connected to the guide block (13b) through an adjustment bracket (13d). An adjustment guide (131) is provided inside the cylinder bracket (13g) and is held firmly though a lock pin (13i) and an adjustment lever (13h). The adjustment bracket (13d) has a slot and by loosening the adjustment lever (13h) the cylinder bracket (13g) can be tilted as per the operator's requirement. A spring-loaded pin (13e) is fastened to the adjustment bracket (13d). The spring-loaded pin (13e) engages with one of the adjustment holes (13l). By pulling and moving the spring-loaded pin (13e) to lock with another adjustment hole (13l) the cylinder bracket (13g) can be moved in linear direction to adjust the stripper according to the tire bead size. A stripper actuator (13j) is mounted on the Cylinder bracket (13g). The stripper actuator (13j) may be a pneumatic actuator, an electric actuator or a hydraulic actuator. The stripper actuator (13j) includes a rod end on which a pusher (13k) is mounted.

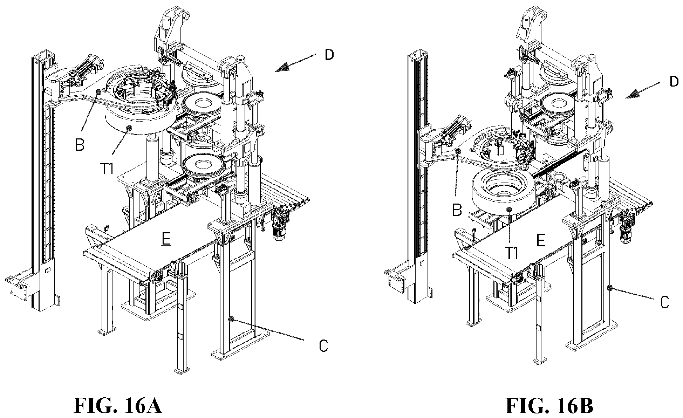

The operation of the PCI according to this disclosure will be explained with reference to FIGS. 16A-16M. Initially, as shown in FIG. 16A, both the top station and the bottom station are in a fully open condition and the tire handling device (B) is ready to unload a first tire (T1) into the bottom station. FIG. 16B shows the step where the bottom cavity lower rim plate and the corresponding linear arm is extended radially outward with respect to the bottom frame and aligned with a tire handling device (B). The first tire (T1) is loaded on the bottom cavity lower rim plate in this position. The first tire (T1) can be loaded in the bottom cavity (14) of the bottom station from both sides of the PCI.

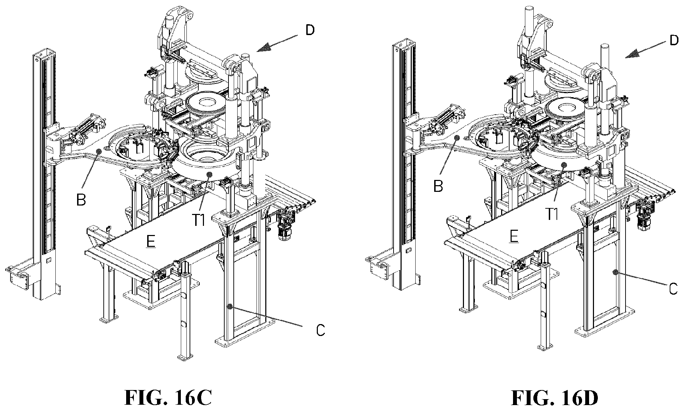

FIGS. 16C and 16D shows the steps where the bottom cavity lower rim plate and the corresponding linear arm is retracted inward and aligned with the bottom cavity upper rim plate. The bottom cavity is now closed (by moving the middle frame towards the bottom frame and engaging the upper and lower rim plates of the bottom cavity with the first tire) and inflation of the first tire (T1) begins.

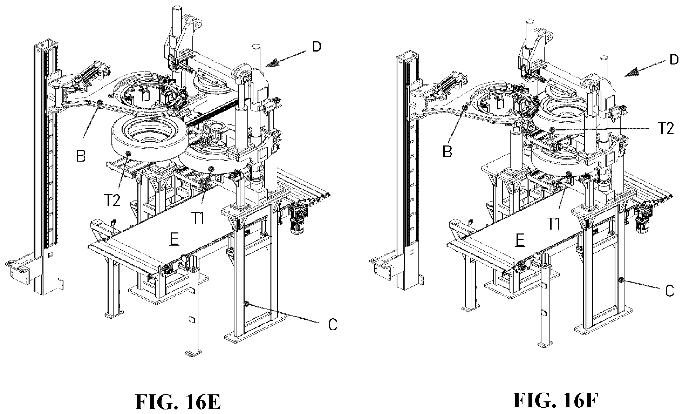

FIG. 16E shows the step where the top cavity lower rim plate and the corresponding linear arm is extended radially outward with respect to the middle frame and aligned with the tire handling device (B). After depositing the first tire (T1 in the bottom station, the tire handling device (B) picks up a second tire (T2) from the curing press and travels upward to position near the top station. The second tire (T2) is then loaded on the top cavity lower rim plate in this position. The second tire (T2) can be loaded in the top cavity (15) of the top station from both sides of the PCI. The first tire (T1) continues to be under inflation at this stage.

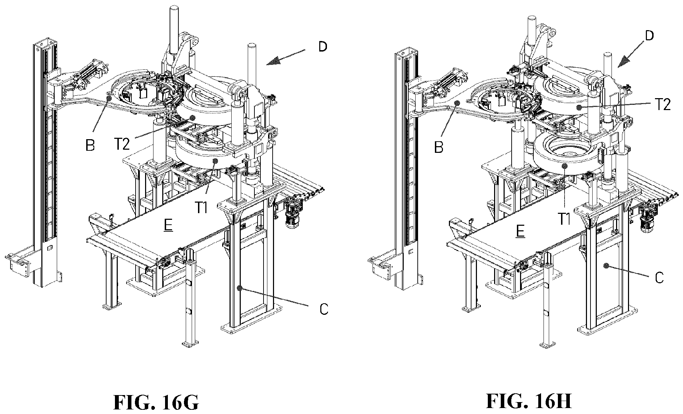

FIGS. 16F and 16G shows the steps where the top cavity lower rim plate and the corresponding linear arm is retracted inward and aligned with the top cavity upper rim plate. The top cavity is now closed (by moving the top frame towards the middle frame and engaging the upper and lower rim plates of the top cavity with the second tire) and inflation of the second tire (T2) begins. The first tire (T1) continues to be under inflation at this stage.

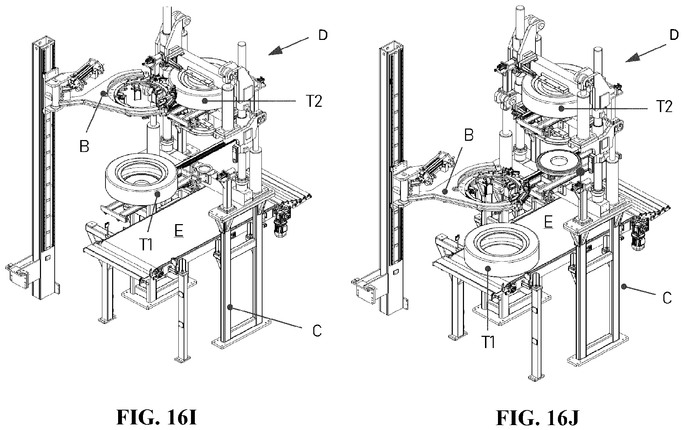

FIGS. 16H and 16I show the steps where inflation has been completed in the first tire (T1) and the middle frame has moved upward to open the bottom cavity. The bottom cavity lower rim plate and the corresponding linear arm extends radially outward with respect to the bottom frame and aligns with the tire handling device (B). The second tire (T2) continues to be under inflation at this stage. The tire handling device (B) is now in position to remove the first tire (T1) from the bottom cavity lower rim plate. As shown in FIG. 16J, the tire handling device (B) removes the first tire (T1) from the bottom cavity. The lower rim plate is retracted towards the bottom cavity and the tire handling device (B) then places the first tire (T1) on a conveyor (E). The bottom cavity lower rim plate and the corresponding linear arm is retracted inward and is aligned with the bottom cavity upper rim plate. The second tire (T2) continues to be under inflation at this stage.

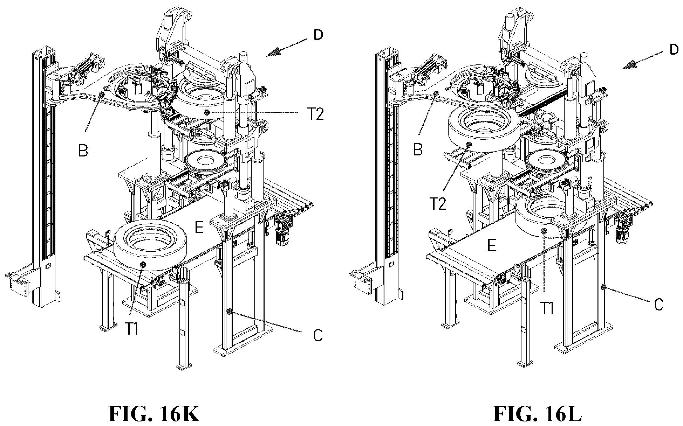

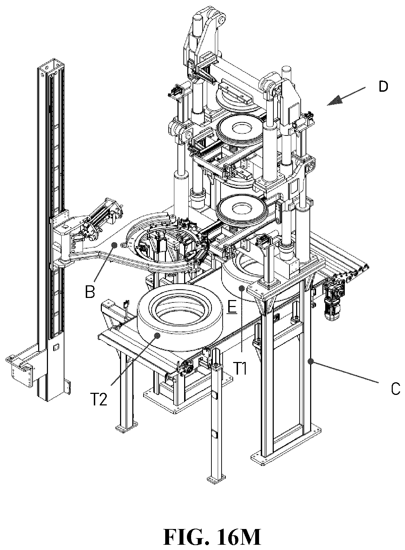

FIG. 16K and 16L show the steps where inflation has been completed in the second tire (T2) and the top frame has moved upward to open the top cavity. The top cavity lower rim plate and the corresponding linear arm extends radially outward with respect to the middle frame and aligns with the tire handling device (B) which has travelled upwards to be in position near the top station. In this step, the conveyor (E) is operated such that the first tire (T1) is surged forward in the conveyor belt to create space to receive the second tire (T2). The tire handling device (B) is now in position to remove the second tire (T2) from the top cavity lower rim plate. As shown in FIG. 16M, the tire handling device (B) removes the second tire (T2) from the top cavity and places the second tire (T2) on a conveyor (E). The bottom cavity lower rim plate and the corresponding linear arm is retracted inward and is aligned with the bottom cavity upper rim plate. The post cure inflator (D) returns to its fully open condition and is ready for the next batch of tires to be inflated. The first tire (T1) and the second tire (T2) placed on the conveyor (E) are taken to a further processing station for inspection.

The PCI of the present disclosure has a compact construction and reduces machine footprint. The overall height of the PCI is lesser thereby able to be placed inside areas with short ceiling height. Optimal height and width of PCI according to this disclosure eliminates the requirement of platforms, ladders and lifts required for top station access, and the time taken for service and maintenance is significantly reduced because of sufficient space for access and elimination of complex actuator mechanisms. Stroke requirement for the tire handling device is greatly reduced since the height of PCI is reduced.

Descriptions for elements in figures should be understood to apply equally to corresponding elements in other figures, unless indicated otherwise. Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations, or variations, or combinations of the specific embodiments discussed herein. Therefore, it is intended that this disclosure be limited only by the claims and the equivalents thereof.

## Claims

1. A post-cure tire handling device comprising:
a rigidly mounted bottom frame (1);
a middle frame (2) capable of moving relative to the bottom frame (1), the middle frame and the bottom frame (1) forming a bottom cavity (14);
a top frame (3) capable of moving relative to a middle frame (2), the top frame (3) and the middle frame (2) forming a top cavity (15);
at least two guide columns (5a) mounted on the bottom frame (1) for guiding the movements of the middle frame (2) and/or the top frame (3) relative to the bottom frame (1) and/or the middle frame (2), respectively.
a bottom cavity holder assembly (16) comprising:
a bottom cavity upper rim plate (18) mounted to the middle frame (2) and capable of moving together with the middle frame (2);
a bottom cavity lower rim plate (17) mounted to the bottom frame (1) and axially aligned to the bottom cavity upper rim plate (18),
a top cavity holder assembly (19) comprising:
a top cavity upper rim plate (21) mounted to the top frame (3) and capable of moving together with the top frame (3);
a top cavity lower rim plate (20) mounted to the middle frame (2) and axially aligned to the top cavity upper rim plate (21), the top cavity lower rim plate (20) is capable of moving together with the middle frame.

2. The post-cure tire handling device as claimed in claim 1, wherein the bottom cavity lower rim plate (17) is capable of moving radially IN and OUT with respect to the bottom frame (1), and the top cavity lower rim plate (20) is capable of moving radially IN and OUT with respect to the middle frame (2).

3. The post-cure tire handling device as claimed in claim 1, wherein the top (15) and bottom (14) cavities function independent of each other, such that the middle frame (2) is capable of moving relative to the bottom frame (1) without disturbing the top cavity (15).

4. The post-cure tire handling device as claimed in claim 1, wherein:
the bottom cavity lower rim plate (17) is spring-loaded and the axial movement of the bottom cavity lower rim plate (17) is limited to the spring cushion provided to the spring-loaded bottom cavity lower rim plate (17);
the bottom cavity upper rim plate (18), and the top cavity upper rim plate (21) are movable in the axial direction; and
the top cavity lower rim plate (20) is spring loaded, and the axial movement of the top cavity lower rim plate (20) is not limited to the spring cushion provided to the spring-loaded top cavity lower rim plate (20).

5. The post-cure tire handling device as claimed in claim 1, comprising
a first actuating means (4a, 4b) mounted on the bottom frame (1) to move the middle frame (2) towards and away from the bottom frame (1), wherein the first actuating means (4a, 4b) comprises at least two actuators (4a, 4b) mounted either diagonally opposite each other, or in line with each other on the bottom frame (1),
a second actuating means (6a, 6b) mounted on the middle frame (2) to move the top frame (3), together with the top cavity upper rim plate (21), towards and away from the middle frame (2), wherein the second actuating means (6a, 6b) comprises at least two actuators (6a, 6b) mounted either diagonally opposite each other, or in line with each other on the middle frame (2),
wherein each of the first and second actuating means (4a, 4b; 6a, 6b) is a hydraulic, or a pneumatic, or an electric actuator.

6. The post-cure tire handling device as claimed in claim 5, wherein the bottom cavity upper rim plate (18), the top cavity lower rim plate (20), the top cavity upper rim plate (21), the top frame (3), and the middle frame (2), are capable of moving as a single unit when actuated by the first actuating means (4a, 4b).

7. The post-cure tire handling device as claimed in claim 1, comprising
a first safety lock mechanism (9) for locking the middle frame (2) at a predetermined distance from the bottom frame (1), and
a second safety lock mechanism (10) for locking the top frame (3) at a predetermined distance from the middle frame (2).

8. The post-cure tire handling device as claimed in claim 1, comprising at least one first tire stripper (13) mounted on the middle frame (2) and moveable together with the middle frame (2), and at least one second tire stripper (13) mounted on the top frame (3) and moveable together with the top frame (3).

9. The post-cure tire handling device as claimed in claim 1, comprising:
a first sensing device for controlling the movement of the bottom cavity upper rim plate (18), and
a second sensing device for controlling the movement of the top cavity upper rim plate (21).

10. The post-cure tire handling device as claimed in claim 1, wherein a tire (T1, T2) can be loaded and/or unloaded in/from the top (15) and/or bottom (14) cavity from both sides of the device.

11. The post-cure tire handling device as claimed in claim 1, wherein:
the lower rim plates (17, 20) are spring loaded and configured to handle a biasing pressure, and
the upper rim plates (18, 21) are hydraulically actuated and configured to handle a main pressure.

12. The post-cure tire handling device as claimed in claim 1, wherein each of the bottom cavity lower rim plate (17) and the top cavity lower rim plate (20) is mounted on a linear arm (17b, 20b), the linear arm (17b, 20b) is capable of sliding IN and OUT of bottom station (S_{b}) and top station (St), respectively, wherein, during the IN position, the linear arm (17b, 20b), together with the lower rim plate (17, 20), is concentric with the top rim plate (18, 21), and, during the OUT position, the linear arm (17b, 20b), together with the lower rim plate (17, 20), is aligned to an unloading device (B) of a tire curing press (A).

13. A post-cure tire handling device comprising:
a rigidly mounted first frame (1);
a second frame (2) capable of moving relative to the first frame (1), the first frame (1) and the second frame (2) forming a cavity (14);
a holder assembly (16) for engaging with a tire (T1) within the cavity (14), the holder assembly comprising:
an upper rim plate (18) mounted to the second frame (2) and capable of moving together with the second frame (2) in an axial direction;
a lower rim plate (17) rigidly fixed in the axial direction and axially aligned to the upper rim plate (18), the lower rim plate (17) is mounted to the first frame (1) and is capable of moving radially IN and OUT with respect to the first frame (1).

14. A method of operating the post-cure tire handling device as claimed in claim 1 comprising the steps of:
moving the bottom cavity lower rim plate (17) radially OUT to receive a first tire (T1);
placing the first tire (T1) on the bottom cavity lower rim plate (17);
moving the bottom cavity lower rim plate (17) radially IN to axially align with the bottom cavity upper rim plate (18);
closing the bottom cavity (14) by moving the middle frame (2) toward the bottom frame (1);
inflating and cooling the first tire (T1);
moving the top cavity lower rim plate (20) radially OUT to receive a second tire (T2);
placing the second tire (T2) on the top cavity lower rim plate (20);
moving the top cavity lower rim plate (20) radially IN to axially align with the top cavity upper rim plate (21);
closing the top cavity (15) by moving the top frame (3) toward the middle frame (2); and
inflating and cooling the second tire (T2).

15. The method as claimed in claim 14, comprising the steps of:
opening the bottom cavity (14) by moving the middle frame (2) in a direction away from the bottom frame (1);
locking the middle frame (2) at a predetermined distance from the bottom frame (1);
moving the bottom cavity lower rim plate (17) radially OUT;
unloading the first tire (T1) from the bottom cavity lower rim plate (17) and placing on a conveyor (E);
opening the top cavity (15) by moving the top frame (3) in a direction away from the middle frame (2);
locking the top frame (3) at a predetermined distance from the middle frame (2);
moving the top cavity lower rim plate (20) radially OUT; and
unloading the second tire (T2) from the top cavity lower rim plate (20) and placing on the conveyor (E).
